# EUROPÄISCHE PATENTANMELDUNG

(11) **EP 0 895 206 A1**
(43) Veröffentlichungstag der Anmeldung: **03.02.1999**
(21) Anmeldenummer: 97112981.2
(22) Anmeldetag: 29.07.1997
(51) Int. Cl.: G08B 13/24, G01V 15/00

(54) **Sicherungselement für die elektronische Artikelsicherung**

(71) Anmelder: Esselte Meto International GmbH, 64646 Heppenheim (DE); Sensormatic Electronics Corporation, Boca Raton, Florida 33431-0700 (US)
(72) Erfinder: Rührig, Manfred, Dr., 69469 Weinheim (DE); Stocks, David, Melbourn, Royston, Herts SG8 6UH (GB); Patterson, Hubert A., Boca Raton, FL 33431 (US); Mears, Gregory N., Boca Raton, FL 33498 (US)
(74) Vertreter: Andres, Angelika Maria

(57) **Zusammenfassung**

Die Erfindung betrifft ein Sicherungselement (3) für die elektronische Artikelsicherung.

Der Erfindung liegt die Aufgabe zugrunde, ein Sicherungselement vorzuschlagen, das von Überwachungssystemen (S1, S2), die in unterschiedlichen Frequenzbereichen (F1, F2) arbeiten, detektiert wird.

Gemäß einer Ausführungsform des erfindungsgemäßen Sicherungselements wird die Aufgabe durch die folgenden Merkmale gelöst: es besteht aus zumindest zwei Materialien (1; 2) mit hoher Permeabilität, die bei Anregung durch ein äußeres magnetisches Wechselfeld (H) jeweils ein charakteristisches Signal (Signal 1; Signal 2) aussenden; die maximalen Signalanteile beider Materialien (1; 2) liegen in unterschiedlichen Frequenzbereichen (F1, F2); die Signalanteile des einen Materials (1; 2) sind jeweils in dem Frequenzbereich (F2; F1) vernachlässigbar gering, in dem das andere Material (2; 1) einen maximalen Signalanteil aufweist.

## Beschreibung

Die Erfindung betrifft ein Sicherungselement für die elektronische Artikelsicherung.

Sicherungselemente in Form von weichmagnetischem Streifenmaterial werden vielfach in Warenhäusern zur Sicherung von Waren gegen Diebstahl eingesetzt. Zur Erzielung einer ausreichend hohen Detektionsrate werden ausgeklügelte Verfahren eingesetzt, die die Gefahr von Fehlalarmen effektiv herabsetzen. So ist aus der EP 123 586 B bekannt geworden, zusätzlich zu zwei Abfragefelder mit den Frequenzen f1 und f2 im kHz-Bereich ein Feld mit einer im Hz-Bereich liegenden Frequenz in die Abfragezone zu senden. Die beiden Abfragefelder mit den Frequenzen f1 und f2 regen ein in der Abfragezone befindliches Sicherungs-element zur Remission eines charakteristischen Signals mit den Intermodulationsfrequenzen n·f1 ± m·f2 (n, m = 0, 1, 2,...) an. Das niederfrequente Abfragefeld bewirkt, daß das Sicherungselement im Takt dieses Feldes von der Sättigung in eine Richtung zur Sättigung in die andere Richtung getrieben wird. Das charakteristische Signal tritt daher periodisch mit der Frequenz des niederfrequenten Feldes auf.
Als alternative Lösung eines sog. harmonischen Detektionssystems ist auch bekannt geworden, lediglich ein im kHz-Bereich liegendes Abfragefeld zur Erregung des Sicherungselementes zu verwenden, wobei das charakteristische Signal des Sicherungselementes wiederum im Takte eines niederfrequenten Feldes, das das weichmagnetische Material zwischen den beiden Sättigungen hin- und hertreibt, auftritt.

Zwecks Auswertung wird die Form des charakteristischen Signals anschließend mit einer vorgegebenen Signalform verglichen. Stimmen beide überein, wird dies als unerlaubter Aufenthalt eines gesicherten Artikels in der Abfragezone interpretiert; ein Alarm zeigt dem Bedienpersonal den Diebstahl an.

Die Hysteresekurven von Sicherungselementen, die aus einem weichmagnetischen Material gefertigt sind, weisen zwischen den beiden Sättigungszuständen einen im wesentlichen linearen Verlauf auf. Daneben sind Sicherungselemente bekannt geworden, deren Hysteresekurven einen sprunghaften Übergang zwischen den beiden Sättigungszuständen zeigen, sobald sie über ein äußeres Magnetfeld zur Änderung ihrer Sättigungsrichtung gezwungen werden. Materialien mit einem unstetigen Übergangsverhalten zwischen den beiden Sättigungszuständen werden als "Materialien mit Barkhauseneffekt" bezeichnet. Bereits im Niederfrequenzbereich weisen sie eine hohe Permeabilität auf, was bedeutet, daß sie durch niederfrequente Abfragefelder zur Aussendung eines charakteristischen Signals angeregt werden. Weiterhin zeichnen sich die charakteristischen Signale von Barkhausen Materialien durch einen scharfen Peak aus. Dies wiederum bedeutet, daß in Harmonischen hoher Ordnung noch ein relativ großen Signalanteil auftritt.

Hergestellt werden derartige Materialien durch geeignete Wärmebehandlung von weichmagnetischen Materialien. Ausführlich werden die Eigenschaften dieser Materialien ebenso wie die physikalischen Grundlagen des Barkhauseneffekts in der US-PS 4,660,025 oder auch in der EP 0 448 114 A1 beschrieben. Insbesondere wird in den zitierten Schriften des Standes der Technik Bezug darauf genommen, wie durch physikalische Spezialbehandlung von weichmagnetischem Materials dieses in ein Material mit einem hohen Barkhauseneffekt überführt werden kann.

Sicherungselemente, die sich den Barkhauseneffekt zunutze machen, weichen hinsichtlich ihrer Signalform erheblich von weichmagnetischen Sicherungselementen ab. Als unmittelbare Folge hiervon sind sie nur mit relativ geringer Wahrscheinlichkeit in sog. harmonischen Systemen erkennbar; weichmagnetische Sicherungselemente wiederum können nur schwer in Systemen erkannt werden, die zur Detektion von Sicherungselementen mit Barkhauseneffekt ausgestaltet sind. Anders sieht die Sache aus, wenn man erreichen möchte, daß ein Sicherungselement sowohl von einem harmonischen als auch einem Barkhausen-Überwachungssystem erkannt wird. Integriert man beide Arten von Sicherungselementen -nämlich eins mit weichmagnetischem und eins mit Barkhausen-Material- in ein Sicherungselement, so beeinflussen sich die beiden über ihre Magnetfelder u.U. so stark, daß das Intermodulationssignal des kombinierten Sicherungselements weder in einem harmonischen noch in einem Barkhausen-Überwachungssystem detektierbar ist.

Der Erfindung liegt die Aufgabe zugrunde, ein Sicherungselement vorzuschlagen, das von Überwachungssystemen, die in unterschiedlichen Frequenzbereichen arbeiten, detektiert wird.

Die Aufgabe wird dadurch gelöst, daß das Sicherungselement aus zumindest zwei Materialien mit hoher Permeabilität besteht, die bei Anregung durch ein äußeres magnetisches Wechselfeld jeweils ein charakteristisches Signal aussenden; die maximalen Signalanteile beider Materialien liegen in unterschiedlichen Frequenzbereichen; desweiteren sind die Signalanteile des einen Materials jeweils in dem Frequenzbereich vernachlässigbar gering, in dem das andere Material einen maximalen Signalanteil aufweist.

Gemäß einer vorteilhaften Weiterbildung des erfindungsgemäßen Sicherungselements sind die physikalischen Eigenschaften beider Materialien derart aufeinander abgestimmt sind, daß der Anteil des charakteristischen Signals des eines Materials in dem Frequenzbereich vernachlässigbar gering ist, in dem der Signalanteil des charakteristischen Signals des jeweils anderen Materials sein Maximum erreicht.

Eine weitere Lösung der gestellten Aufgabe sieht vor, daß das Sicherungselement aus einem Material mit Barkhauseneffekt (hohe Permeabilität; geringe Koerzitivkraft im Frequenzbereich (F1), große Koerzitivkraft im Frequenzbereich (F2) mit F2>>F1) besteht, das durch ein äußeres Magnetfeld zur Aussendung eines charakteristischen Signals angeregt wird, welches in einem Überwachungssystem S1 erkennbar ist, und aus einem weichmagnetischen Material (hohe Permeabilität; kleine Koerzitivkraft im Frequenzbereich (F2)), das bei Anlegen eines magnetischen Wechselfeldes zur Aussendung eines charakteristischen Signals angeregt wird, welches in einem Überwachungssystem 52 erkennbar ist; desweiteren sind die physikalischen Eigenschaften beider Materialien derart aufeinander abgestimmt sind, daß die Intensität des charakteristischen Signals (Signal 2) des weichmagnetischen Materials im Detektionsbereich (F1) des Überwachungssystems (S1) vernachlässigbar gering ist, während sie in dem Detektionsbereich (F2) des Überwachungssystems (S2) ihr Maximum erreicht und daß die Intensität des charakteristischen Signals (Signal 1) des Materials mit Barkhauseneffekt im Detektionsbereich (F1) des Überwachungssystems (S1) einen maximalen Wert erreicht, während sie in dem Detektionsbereich (F2) des Überwachungssystems (S2) vernachlässigbar gering ist. Physikalische Eigenschaften bedeutet übrigens in bezug auf die Barkhausen-Sicherungselemente, daß das Material durch seine äußere Form, durch Wärmebehandlung oder durch Anwendung von mechanischen Spannungen optimiert ist. Bezüglich des weichmagnetischen Materials bedeutet dieses Verändern der physikalischen Eigenschaften -z.B. im Falle von Streifenelementen- ein Variieren der Länge und damit des Entmagnetisierungsfaktors der Streifenelemente.

Eine vorteilhafte Ausgestaltung des erfindungsgemäßen Sicherungselements sieht vor, daß beide Materialien in Form eines Dünnfilms und/oder eines Streifens und/oder eines Drahtes und/oder einer Folie vorliegen. Günstig ist es, wenn beide Materialien in derselben Form verwendet werden.

Bereits an vorhergehender Stelle wurde erwähnt, daß die Optimierung des Frequenzverhaltens der verwendeten Materialien durch Ändern ihrer physikalischen Eigenschaften erfolgt. Als bevorzugte Weiterbildung wird allgemein vorgeschlagen, die Volumenanteile beider Materialien derart zu bemessen, daß ihre Signalanteile in dem jeweils anderen Überwachungssystem vernachlässigbar gering sind.

Eine weitere Optimierung läßt sich durch eine geeignete relative Anordnung der Materialien zueinander erreichen. Vorzugsweise wird sie so gewählt, daß die Kopplung über ihre Magnetfelder so gering wie möglich ist. Der einfachste Fall wäre der, den Abstand zwischen dem Barkhausen-Sicherungselement und dem weichmagnetischen Sicherungselement entsprechend groß zu wählen. Dies bringt jedoch den Nachteil, daß das kombinierte Sicherungselement groß dimensioniert werden muß, was man generell (Kostengründe) vermeiden möchte. Optimierung im Sinne der Erfindung bedeutet vielmehr einen Kompromiß zu finden zwischen minimaler Wechselwirkung und maximal möglicher Detektionsrate in Systemen, die für die Detektion von charakteristischen Signalen in unterschiedlichen Frequenzbereichen ausgestaltet sind.

Gemäß einer vorteilhaften Weiterbildung des erfindungsgemäßen Sicherungselements wird vorgeschlagen, daß die Materialien eine längliche Form aufweisen und parallel zueinander ausgerichtet sind. Diese Ausgestaltung ermöglicht die Fertigung von Sicherungselementen mit relativ geringer seitlicher Ausdehnung.

Spielt die Größe der Sicherungselemente eine untergeordnete Rolle, so ist es z.B. im Falle von zwei Materialien durchaus möglich, diese unter einem beliebigen Winkel (α) zueinander anzuordnen. Optimal ist es, wenn beide Materialien senkrecht zueinander angeordnet sind, da dann die gegenseitige Beeinflussung gleich Null ist.

Als besonders günstig hat es sich herausgestellt, wenn die verwendeten Materialien eine geringe Magnetostriktion aufweisen.

Gemäß einer vorteilhaften Ausgestaltung ist das erfindungsgemäße Sicherungselement deaktivierbar. Hierzu ist ein halbhart- oder hartmagnetisches Material vorzugsweise in der Form von Plättchen vorgesehen ist, das zumindest einem der beiden Materialien zugeordnet ist. Die Deaktivierung erfolgt in bekannter Weise dadurch, daß das halbhart- oder hartmagnetische Material einem entsprechend starken Magnetfeld ausgesetzt wird, so daß es in die Sättigung getrieben wird. In diesem Zustand unterbindet es nachfolgend eine Reaktion des weichmagnetischen Materials und/oder des Materials mit hohem Barkhauseneffekt auf das äußere Abfragefeld.
Wird nur eines der beiden Materialien, beispielsweise das weichmagnetische Material, deaktivierbar ausgestaltet, so bedeutet dies, daß im Falle einer Deaktivierung das Sicherungselement in einem Barkhausen-Überwachungssystem optimal detektierbar ist. Sind beiden Materialien halbhart- oder hartmagnetische Deaktivatormaterialien zugeordnet, so kann das Sicherungselement für beide Arten von Überwachungssystemen deaktiviert werden. Vorzugsweise sind die Deaktivatormaterialien für das weichmagnetische Material und das Material mit hohem Barkhauseneffekt von unterschiedlicher Beschaffenheit. Diese Ausgestaltung ermöglicht die wahlweise Deaktivierung des einen und/oder des anderen Materials.

Die Erfindung wird anhand der nachfolgenden Figuren näher erläutert. Es zeigt:
Fig. 1: eine perspektivische Darstellung eines harmonischen (b) und eines Barkhausen-Überwachungssystems (a),
Fig. 2: die Hysteresekurven von weichmagnetischem Material und von Material mit hohem Barkhauseneffekt,
Fig. 3a: eine vorteilhafte Ausgestaltung des erfindungsgemäßen Sicherungselements,
Fig. 3b: die in Fig. 3a gezeigte Ausgestaltung im Detail,
Fig. 3c: eine weitere Ausgestaltung des erfindungsgemäßen Sicherungselements,
Fig. 3d: eine Ausgestaltung eines deaktivierbaren, erfindungsgemäßen Sicherungselements,
Fig. 4: eine schematische Darstellung der charakteristischen Signale in einem Barkhausen-Überwachungssystem:
   a) charakteristisches Signal des weichmagnetischen Materials,
   b) charakteristisches Signal des Barkhausen-Materials,
   c) charakteristisches Signal eines erfindungsgemäßen Sicherungselements,
Fig. 5: eine schematische Darstellung der charakteristischen Signale in einem harmonischen Überwachungssystem:
   a) charakteristisches Signal des weichmagnetischen Materials,
   b) charakteristisches Signal des Barkhausen-Materials,
   c) charakteristisches Signal eines erfindungsgemäßen Sicherungselements,
Fig. 6: eine schematische Darstellung der charakteristischen Signale in einem harmonischen Überwachungssystem mit zwei hochfrequenten Abfragefeldern und einem niederfrequenten Abfragefeld:
   a) charakteristisches Signal des weichmagnetischen Materials,
   b) charakteristisches Signal des Barkhausen-Materials,
   c) charakteristisches Signal eines erfindungsgemäßen Sicherungselements und
Fig. 7: eine Darstellung der Frequenzspektren in einem Barkhausen-Überwachungssystem:
   a) eines Barkhausen-Sicherungselements,
   b) eines weichmagnetischen Sicherungselements,
   c) eines erfindungsgemäßen Sicherungselements.

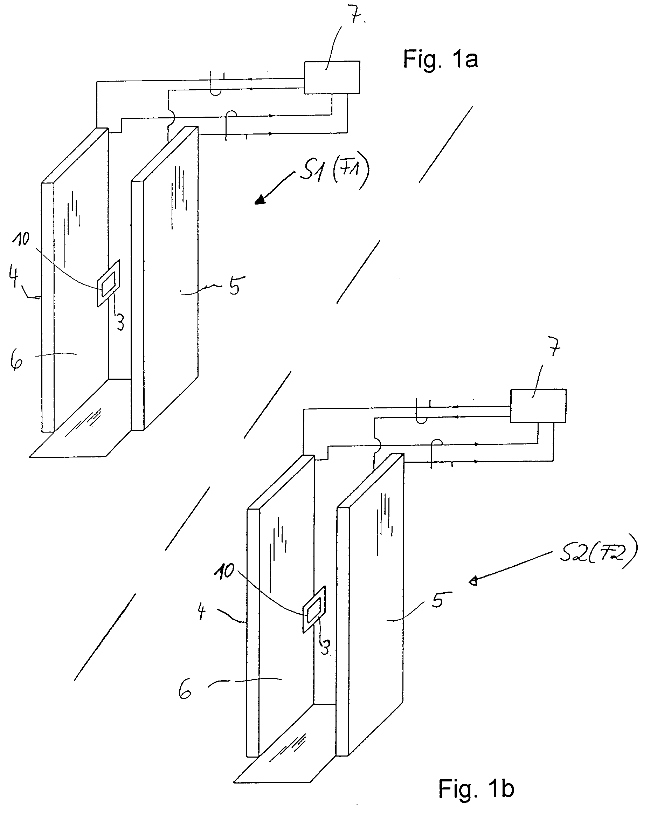

Fig. 1a zeigt eine perspektivische Darstellung eines Überwachungssystems S1 fur Barkhausen-Sicherungselemente, während Fig. 1b eine perspektivische Darstellung eines harmonischen Überwachungssystems S2 zeigt. Sowohl vom Aufbau als auch von der generellen Arbeitsweise zeigen beide Überwachungssysteme eine große Ähnlichkeit. Die Unterschiede liegen lediglich im Detail.
Die Sendevorrichtung 4 sendet eine Abfragefeld H in die zu sichernde Zone 6 aus. Das Barkhausen-Sicherungselement 1 bzw. das weichmagnetische Sicherungselement 2 wird durch das Abfragefeld H zur Aussendung eines charakteristischen Signals angeregt. Während die Abfragefrequenz des Barkhausen-Überwachungssystems S1 im Niederfrequenzbereich liegt (z.B. bei 70 Hz), liegt die Abfragefrequenz des harmonischen Systems S2 im Kilo-Hertz-Bereich. Wie bereits in der Beschreibungseinleitung dargelegt kann die hochfrequente Abfragefrequenz bei harmonischen Überwachungssystemen auch durch eine niederfrequente Abfragefrequenz moduliert werden.
Das charakteristische Signal wird von der jeweiligen Empfangsvorrichtung 5 detektiert und an die Rechen/Regeleinheit 7 weitergeleitet. Diese wertet das Signal nach einem vorgegebenen Algorithmus aus und löst ggf. einen Alarm aus, der den unerlaubten Aufenthalt eines gesicherten Artikels 10 in der Abfragezone 6 anzeigt.

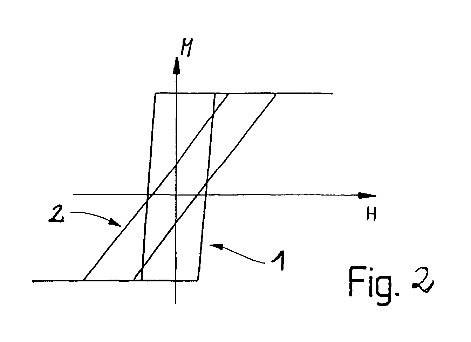

In Fig. 2 sind die statischen Hysteresekurven von weichmagnetischem Material 2 und von Material 1 mit hohem Barkhauseneffekt im üblichen H-M-Diagramm aufgetragen. Während die Hysteresekurve im Falle des weichmagnetischen Materials 2 zwischen den beiden entgegengesetzten Magnetisierungszuständen einen linearen, stetigen Übergang aufweist, erfolgt der Übergang im Falle des Materials 1 mit hohem Barkhauseneffekt sprunghaft bei einer relativ kleinen Feldstärke H.

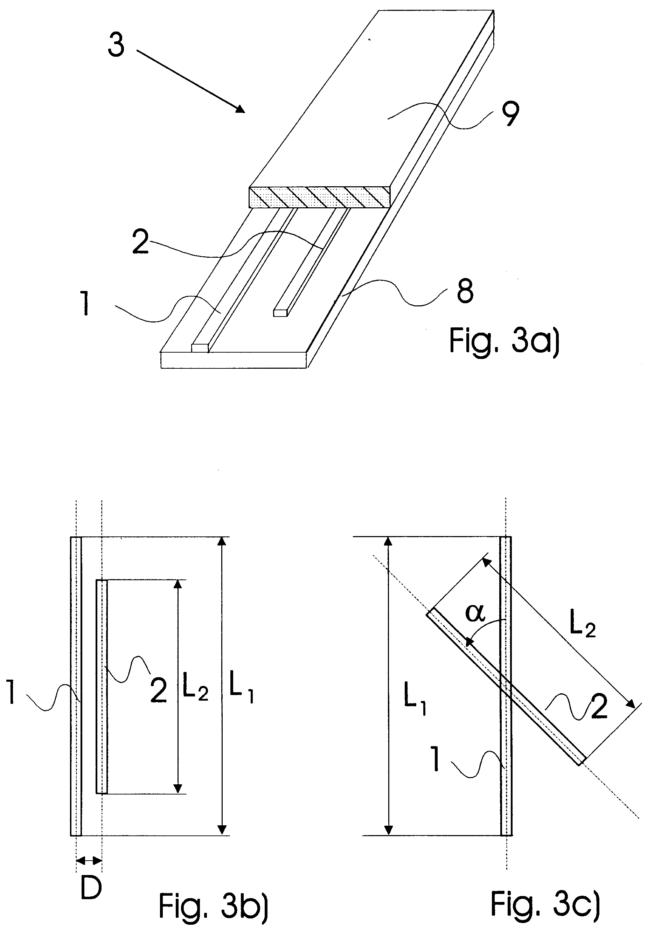

Fig. 3a zeigt eine vorteilhafte Ausgestaltung des erfindungsgemäßen Sicherungselements 3. Auf einer Trägerschicht 8 sind zwei Streifenelemente angeordnet. Das eine Streifenelement besteht aus einem Material 1 mit hohem Barkhauseneffekt, das andere ist aus weichmagnetischem Material 2 gefertigt. Beide Streifenelemente 1, 2 sind parallel zueinander angeordnet. Sie werden von einer beschriftbaren Schicht 9 abgedeckt. Fig. 3b zeigt übrigens die beiden Streifenelemente 1, 2 ohne Trägerschicht 8 und ohne beschriftbare Schicht 9.

Die physikalischen Eigenschaften beider Streifenelemente 1, 2 (Länge (L1, L2), Permeabilität und Koerzitivkraft, Volumenanteile, usw.) sind ebenso wie der relative Abstand (D) beider Elemente 1, 2 derart bemessen, daß die charakteristischen Signale beider Sicherungselemente 1, 2 durch den Einfluß des jeweils anderen Sicherungselements 2, 1 nur unwesentlich verändert werden. Daher wird das erfindungsgemäße Sicherungselement 3 von beiden Überwachungssystemen S1, S2 gleich gut detektiert.

In Fig. 3c ist eine alternative Ausgestaltung des erfindungsgemäßen Sicherungselements 3 zu sehen. Beide Streifenelemente 1, 2 schneiden sich unter dem Winkel α. Optimal ist übrigens ein Winkel α gleich 90°; im Falle einer derartigen Anordnung beeinflussen sich die Magnetfelder beider Sicherungselemente 1, 2 überhaupt nicht. Man muß jedoch dann eine entsprechend große Dimensionierung des Sicherungselements 3 in Kauf nehmen, was nicht für jeden Anwendungsfall akzeptabel erscheint.

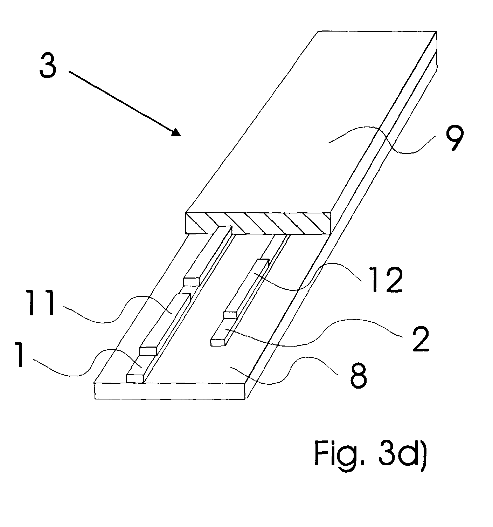

Fig. 3d zeigt eine Ausgestaltung eines deaktivierbaren, erfindungsgemäßen Sicherungselements 3. Hier sind dem Barkhausen-Sicherungselement 1 und dem weichmagnetischen Sicherungselement 2 Materialien 11; 12 mit halbhart-und/oder hartmagnetischen Eigenschaften zugeordnet.

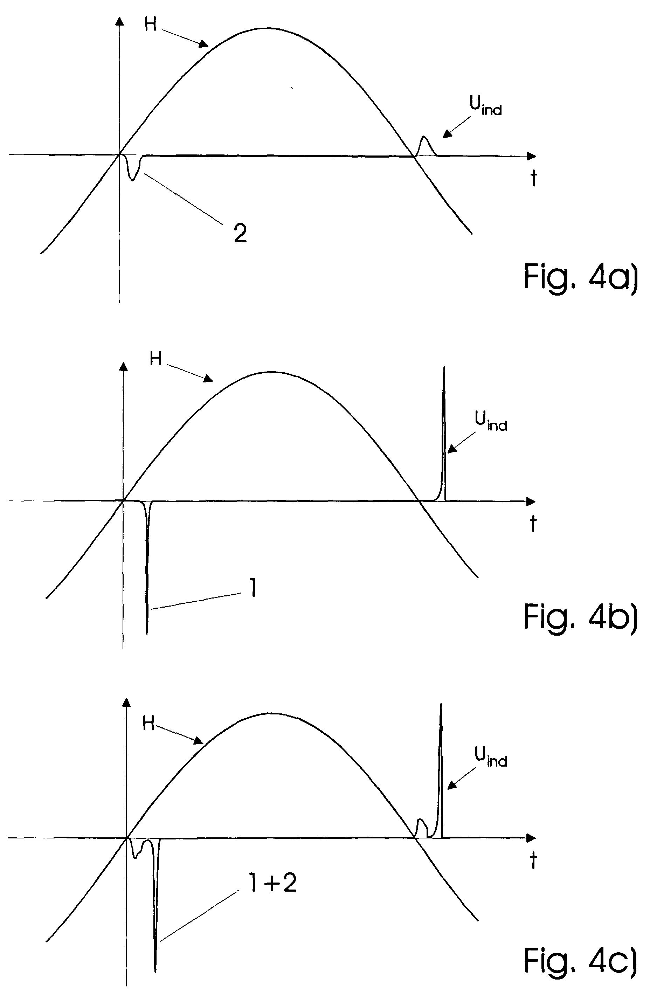

In den nachfolgenden Figuren Fig. 4, Fig. 5 und Fig. 6 ist anhand von Zeitdiagrammen der Effekt verdeutlicht, der durch das erfindungsgemäße Sicherungselement 3 in den unterschiedlichen Überwachungssystemen S1, S2 erzielt wird. Die Figuren 4 beziehen sich auf die Signale, die von einem weichmagnetischen Sicherungselement 2 (Fig. 4a), einem Barkhausen-Sicherungselement 1 (Fig. 4b) und dem erfindungsgemäßen Sicherungselement (Fig. 4c) in einem Barkhausen-Überwachungssystem S1 erzeugt werden. Der sinusförmige Kurvenverlauf in den Figuren deutet die Abfragefrequenz des Abfragefeldes H an, die im Falle eines Barkhausen-Überwachungssystems S1 im Niederfrequenzbereich, z.B. bei 70 Hz, liegt. Bei Umklappen des Magnetisierungszustandes sendet das Sicherungselement 1, 2, 3 ein charakteristisches Signal aus, das in der Empfangsvorrichtung 5 eine Spannung Uind induziert. Die Rechen/Regeleinheit 7 identifiziert ein empfangenes Signal als charakteristisches Signal und löst einen Alarm aus. Wie Fig. 4a zeigt, ist der Signalanteil, der durch ein weichmagnetisches Material 2 in einem Barkhausen-Überwachungssystem S1 erzeugt wird relativ klein, während das Barkhausen-Sicherungselement 1 in dem BarkhausenÜberwachungssystem S1 einen scharfen Peak erzeugt. Würden beide Sicherungselemente 1, 2 einander unkontrolliert beeinflussen, würde das resultierende Intermodulationssignal erheblich von der üblichen Peak-Form abweichen, die von einem ungestört arbeitenden Barkhausen-Sicherungselement 1 herrührt. Die Folge davon ist ein Ansteigen des Risikos, daß das Barkhausen-Überwachungssystem S1 eine 'einfache' Kombination von Barkhausen-Sicherungselement 1 und weichmagnetischem Sicherungselement 2 nicht als Sicherungselement als solches identifizieren kann und folglich keinen Alarm auslöst. Damit einher geht eine erhebliche Reduktion der Detektionswahrscheinlichkeit.

Mit Hilfe des erfindungsgemäßen Sicherungselements 3 wird dieses Risiko nahezu ausgeschlossen. Wie aus einem Vergleich der Figuren Fig. 4b und Fig. 4c deutlich zu erkennen ist, weicht das charakteristische Signal des erfindungsgemäßen Sicherungselementes 3 nur unbedeutend von dem charakteristischen Signal eines üblichen BarkhausenSicherungselements 1 ab. Problemlos wird die Rechen/Regeleinheit 7 des Barkhausen-Überwachungssystems S1 das charakteristische Signal des erfindungsemäßen Sicherungselements 3 als solches identifizieren und konsequenterweise einen Alarm auslösen.

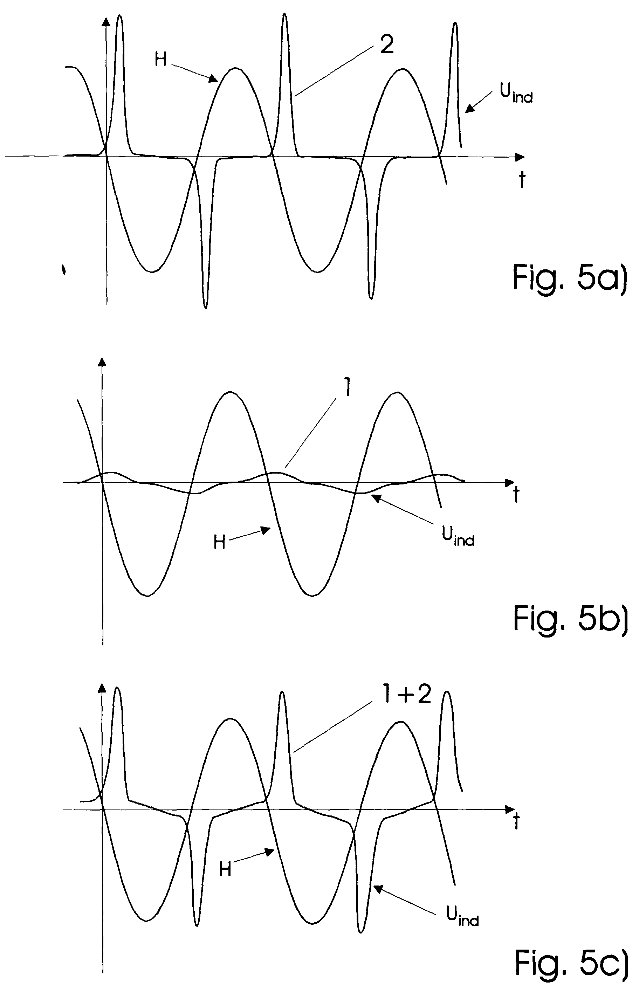

Die Figuren 5 zeigen die analogen Verhältnisse im Falle eines harmonischen Überwachungssystem S2. Der sinusförmige Verlauf deutet wiederum die Abfragefrequenz des Abfragefeldes H an. Bei einem harmonischen Überwachungssystem S2 liegt diese im Kilo-Hertz-Bereich, z.B. bei 5 kHz. Wie aus Fig. 5a ersichtlich, erzeugt ein weichmagnetisches Sicherungselement 2 in dem harmonischen System S2 ein ausgeprägtes Signal, das wiederum in der Empfangsvorrichtung 5 als induzierte Spannung Uind gemessen wird. Das Signal des Barkhausen-Sicherungselements 1 ist gering (Fig. 5b), wirkt sich aber aus den bereits im Zusammenhang mit dem Barkhausen-Überwachungssystem S1 genannten Gründen negativ auf die Detektionsrate des harmonischen Überwachungssystems S2 aus. Wiederum zeigt ein Vergleich der Figuren Fig. 5a und Fig. 5c, daß die Form des charakteristischen Signals des erfindungsgemäßen Sicherungselements 3 wenig von der Form des charakteristischen Signals eines einfachen weichmagnetischen Sicherungselements 2 abweicht.

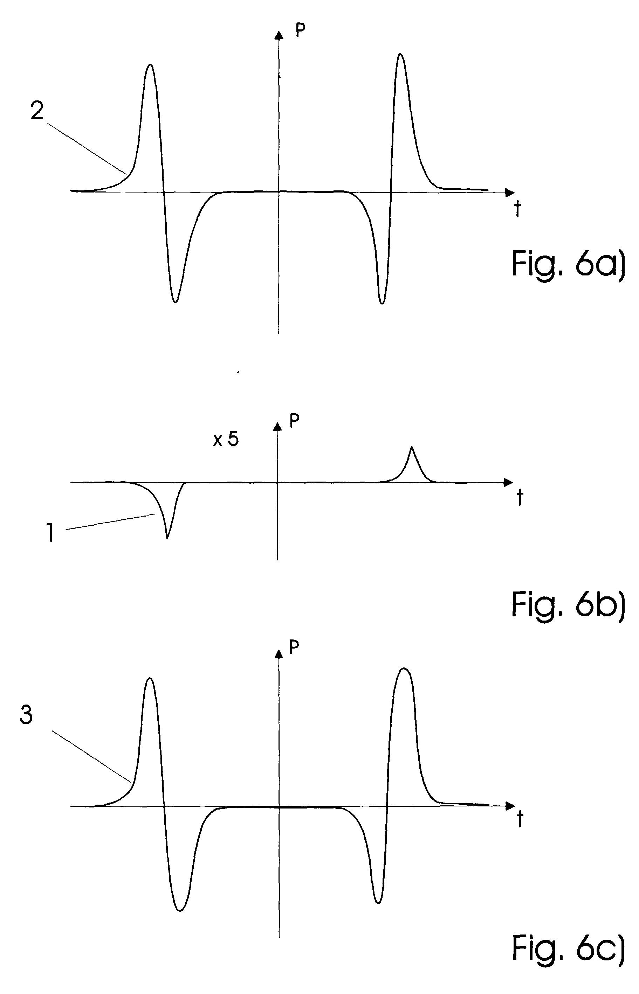

In den Figuren 6 sind die charakteristischen Signale eines weichmagnetischen Sicherungselements 2 (Fig. 6a), eines Barkhausen-Sicherungselements 1 (Fig. 6b) und des erfindungsgemäßen Sicherungselements 3 (Fig. 6c) in einem harmonischen Überwachungssystem S2 mit zwei hochfrequenten Abfragefelder f1, f2 und einem niederfrequenten Abfragefeld f3 dargestellt. Ein entsprechendes harmonisches Überwachungssystem S2 ist übrigens in der Beschreibungseinleitung vorgestellt worden. Wiederum zeigt ein Vergleich der Figuren Fig. 6a und Fig. 6c, daß die charakteristischen Signale von weichmagnetischem Sicherungselement 2 und erfindungsgemäßem Sicherungselement 3 im wesentlichen übereinstimmen. Die Signalform des Barkhausen-Sicherungselements 1 (Fig. 6b) weicht von der erwarteten Form ab. Die erforderliche hohe Detektionsrate des Überwachungssystems wird auch hier bei Verwendung des erfindungsgemäßen Sicherungselements 3 nicht verringert.

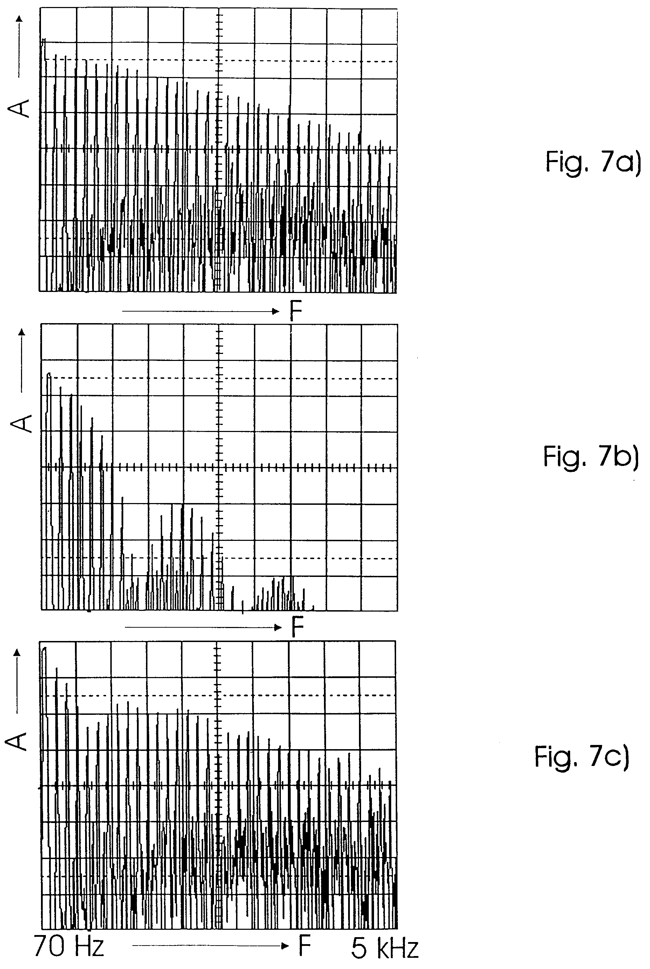

Die Figuren 7 geben den entsprechenden Sachverhalt wieder, wenn das erfindungsgemäße Sicherungselement 3 in einem Barkhausen-Überwachungssystem S1 eingesetzt wird. Allerdings sind hier nicht die Signalverläufe selbst, sondern deren Frequenzspektren dargestellt.

Fig. 7a zeigt das Frequenzspektrum eines Barkhausen-Sicherungselements 1 in einem Barkhausen-Überwachungssystem S1. Das Frequenzspektrum zeichnet sich dadurch aus, daß auch noch in den hohen Harmonischen der Grundfrequenz (F = 70 Hz) relativ große Signalanteile des charakteristischen Signals auftreten.
In Fig. 7b ist das Frequenzspektrum eines weichmagnetischen Sicherungselements 2 in einem Barkhausen-Überwachungssystem S1 zu sehen. Wegen des relativ deutlichen Unterschieds der Spektren ist es unwahrscheinlich, daß die Anwesenheit eines weichmagnetischen Sicherungselements 2 in dem BarkhausenÜberwachunssystem S1 ein Alarm auslöst.
Ganz anders verhält es sich mit dem Frequenzspektrum, das das charakteristische Signal des erfindungsemäßen Sicherungselements 3 in dem Barkhausen-Überwachungssystem S1 hat (Fig. 7c). Die Übereinstimmung mit dem Barkhausen-Sicherungselement 1 (Fig. 7a) ist so groß, daß in dem Barkhausen-Überwachungssystem S1 ein Alarm ausgelöst wird, sobald ein erfindungsgemäßes Sicherungselement 3 in der Abfragezone 6 auftaucht.

### Bezugszeichenliste

- 1: Barkhausen-Material; Barkhausen-Sicherungselement
- 2: weichmagnetisches Material weichmagnetisches Sicherungselement
- 3: erfindungsgemäßes Sicherungselement
- 4: Sendevorrichtung
- 5: Empfangsvorrichtung
- 6: Abfragezone
- 7: Rechen-/Regeleinheit
- 8: Trägerschicht
- 9: beschriftbare Schicht
- 10: Artikel
- 11: halbhart- oder hartmagnetisches Material
- 12: halbhart- oder hartmagnetisches Material
- S1: Überwachungssystem für Barkhausen-Sicherungselemente
- S2: Überwachungssystem für weichmagnetische Sicherungselemente
- D: Abstand
- F1: Niederfrequenzbereich
- F2: Hochfrequenzbereich
- H: Feldstärke
- K1: Koerzitivkraft des Materials 1
- K2: Koerzitivkraft des Materials 2
- Signal1: charakteristisches Signal
- Signal2: charakteristisches Signal

## Patentansprüche

1. Sicherungselement für die elektronische Artikelsicherung,
bestehend aus zumindest zwei Materialien (1; 2) mit hoher Permeabilität, die bei Anregung durch ein äußeres magnetisches Wechselfeld (H) jeweils ein charakteristisches Signal (Signal 1; Signal 2) aussenden,
wobei die maximalen Signalanteile beider Materialien (1; 2) in unterschiedlichen Frequenzbereichen (F1, F2) liegen und wobei die Signalanteile des einen Materials (1; 2) jeweils in dem Frequenzbereich (F2; F1) vernachlässigbar gering sind, in dem das andere Material (2; 1) einen maximalen Signalanteil aufweist.

2. Sicherungselement nach Anspruch 1,
wobei die physikalischen Eigenschaften beider Materialien (1; 2) derart aufeinander abgestimmt sind, daß der Anteil des charakteristischen Signals (Signal 1; Signal 2) des eines Materials (1; 2) in dem Frequenzbereich (F2; F1) vernachlässigbar gering ist, in dem der Signalanteil des charakteristischen Signals (Signal 2; Signal 1) des jeweils anderen Materials (2; 1) sein Maximum erreicht.

3. Sicherungselement für die elektronische Artikelsicherung,
bestehend aus einem Material (1) mit Barkhauseneffekt (hohe Permeabilität; geringe Koerzitivkraft (K1) im Frequenzbereich (F1), große Koerzitivkraft (K1) im Frequenzbereich (F2) mit F2>>F1), das durch ein äußeres Magnetfeld (H) zur Aussendung eines charakteristischen Signals (Signal 1) angeregt wird, welches in einem Überwachungssystem (S1) erkennbar ist,
einem weichmagnetischen Material (hohe Permeabilität; kleine Koerzitivkraft (K2) im Frequenzbereich (F2)), das bei Anlegen eines magnetischen Wechselfeldes (H) zur Aussendung eines charakteristischen Signals (Signal 2) angeregt wird, welches in einem Überwachungssystem (S2) erkennbar ist,
wobei die physikalischen Eigenschaften beider Materialien (1, 2) derart aufeinander abgestimmt sind, daß die Intensität des charakteristischen Signals (Signal 2) des weichmagnetischen Materials (2) im Detektionsbereich (F1) des Überwachungssystems (S1) vernachlässigbar gering ist, während sie in dem Detektionsbereich (F2) des Überwachungssystems (S2) ihr Maximum erreicht, und daß die Intensität des charakteristischen Signals (Signal 1) des Materials (1) mit Barkhauseneffekt im Detektionsbereich (F1) des Überwachungssystems (S1) einen maximalen Wert erreicht, während sie in dem Detektionsbereich (F2) des Überwachungssystems (S2) vernachlässigbar gering ist.

4. Sicherungselement nach Anspruch 1 oder 3,
wobei die Materialien (1; 2) in Form eines Dünnfilms und/oder eines Streifens und/oder eines Drahtes und/oder einer Folie vorliegen.

5. Sicherungselement nach Anspruch 3,
wobei die Volumenanteile beider Materialien (1, 2) derart bemessen sind, daß ihre Signalanteile in dem jeweils anderen Überwachungssystem (S2, S1) vernachlässigbar gering sind.

6. Sicherungselement nach Anspruch 1,3 oder 5
wobei die Materialien (1, 2) derart zueinander angeordnet bzw. voneinander beabstandet sind, daß ihre Wechselwirkung minimal ist.

7. Sicherungselement nach Anspruch 1 oder 3,
wobei beide Materialien (1, 2) eine längliche Form aufweisen und parallel zueinander ausgerichtet sind.

8. Sicherungselement nach Anspruch 1 oder 3,
wobei beide Materialien (1; 2) eine längliche Form aufweisen und unter einem beliebigen Winkel (α) zueinander angeordnet sind.

9. Sicherungselement nach Anspruch 1 oder 3,
wobei beide Materialien (1, 2) eine geringe Magnetostriktion aufweisen.

10. Sicherungselement nach Anspruch 1 oder 3,
wobei ein halbhart- oder hartmagnetisches Material (11; 12) vorgesehen ist, das zumindest einem der beiden Materialien (1; 2) zugeordnet ist und es deaktivierbar macht.

11. Sicherungselement nach Anspruch 10,
wobei das halbhart- oder hartmagnetische Material (11, 12), das zumindest einem der beiden Materialien (1, 2) zugeordnet ist, aus einzelnen Abschnitten oder einem zusammenhängenden Streifen besteht.

12. Sicherungselement nach Anspruch 10 oder 11,
wobei jedem der beiden Materialien (1, 2) ein halbhart-oder hartmagnetisches Material (11, 12) zugeordnet ist,
wobei sich die halbhart- oder hartmagnetische Materialien (11, 12) in einer ihrer magnetischen Eigenschaften, z.B. in ihren Koerzitivkräften (K1, K2) unterscheiden.
